(19) Europäisches Patentamt
European Patent Office
Office européen des brevets

(11) Publication number: **0 424 842 A2**

(12) # EUROPEAN PATENT APPLICATION

(21) Application number: **90120210.1**

(22) Date of filing: **22.10.90**

(51) Int. Cl.[5]: **C08L 81/02**, //(C08L81/02, 15:00),(C08L81/02,63:00)

(30) Priority: **23.10.89 JP 275186/89**

(43) Date of publication of application: **02.05.91 Bulletin 91/18**

(84) Designated Contracting States: **BE DE FR GB NL**

(71) Applicant: **MITSUBISHI RAYON CO., LTD.**
**3-19, Kyobashi 2-chome Chuo-Ku**
**Tokyo 104(JP)**

(72) Inventor: **Nakata, Akira, c/o Central Research Laboratories**
**Mitsubishi Rayon Co., Ltd. 20-1, Miyuki-cho**
**Otake-shi, Hiroshima, 739-06(JP)**
Inventor: **Mori, Hiroshi, c/o Central Research Laboratories**
**Mitsubishi Rayon Co., Ltd. 20-1, Miyuki-cho**
**Otake-shi, Hiroshima, 739-06(JP)**
Inventor: **Yamamoto, Naoki, c/o Central Research Laboratories**
**Mitsubishi Rayon Co., Ltd. 20-1, Miyuki-cho**
**Otake-shi, Hiroshima, 739-06(JP)**
Inventor: **Ueno, Takuya**
**3-5, Ikedauemachi, Nagata-ku**
**Kobe-shi, Hyogo(JP)**

(74) Representative: **TER MEER - MÜLLER - STEINMEISTER & PARTNER**
**Mauerkircherstrasse 45**
**W-8000 München 80(DE)**

(54) **High-impact polyarylene sulfide resin composition.**

(57) A polyarylene sulfide resin composition obtained by melting and kneading 60 to 99.5 parts by weight of a polyarylene sulfide resin and 0.5 to 40 parts by weight of an epoxy-modified conjugated diene polymer (100 parts by weight in total) . In she composition of the present invention, an epoxy-modified conjugated diene polymer, polyarylene sulfide resin, etc. are uniformly mixed so that each component does not cause phase separation upon molding. Furthermore, the composition of the present invention is excellent in impact strength, heat resistance and external appearance.

EP 0 424 842 A2

# HIGH-IMPACT POLYARYLENE SULFIDE RESIN COMPOSITION

## BACKGROUND OF THE INVENTION

### Field of the Invention

The present invention relates to a high-impact polyarylene sulfide resin composition having excellent impact strength and heat resistance.

Compositions of the present invention are used as materials for molded articles in various fields such as automobiles, electric and electronic parts and precision machines.

### Description of the Prior Art

As a composition having an improved impact strength of polyarylene sulfide resin, Japanese Patent Application Kokai (Laid-Open) No. 56-118456 discloses a composition obtained by formulating in a polyarylene sulfide resin a conjugated diene copolymer prepared from a vinyl aromatic compound and a conjugated diene compound.

However, impact strength is not satisfactorily improved with this composition, without damaging heat resistance and mechanical properties of the polyarylene sulfide resin. In addition, the composition also involves a problem that its surface appearance looks poor.

## SUMMARY OF THE INVENTION

In view of the foregoing actual situation, the present inventors have made extensive studies, aiming at preparing polyarylene sulfide resin compositions having an improved impact strength and having good external appearance, without seriously damaging the heat resistance and mechanical properties inherently possessed by the polyarylene sulfide resin. As a result, the inventors have found that by formulating a specific modified conjugated diene polymer in a polyarylene sulfide resin in a specific amount, the above object can be achieved, and have reached the present invention.

That is, the gist of the present invention lies in a polyarylene sulfide resin composition obtained by melting and kneading 60 to 99.5 parts by weight of a polyarylene sulfide resin and 0.5 to 40 parts by weight of an epoxy-modified conjugated diene polymer.

An object of the present invention is to provide a polyarylene sulfide resin composition having excellent impact strength and heat resistance.

## DESCRIPTION OF PREFERRED EMBODIMENTS

The polyarylene sulfide resin used in the present invention is a polymer having as the major constituent a repeating unit represented by the general formula: $-\!(Ar-S)\!-$
wherein Ar represents at least one member selected from the group consisting of:

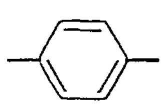 , 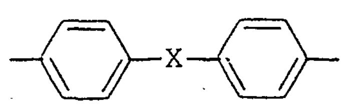

(wherein X represents $-SO_2-$, -CO-, -O- or an alkylene group having 1 to 5 carbon atoms on the principal chain, which may optionally be substituted with a lower alkyl side chain) and, the aforesaid aromatic rings substituted with 1 to 3 halogen atoms, methyl group, etc. The polyarylene sulfide resin may be a polymer either composed of a straight chain structure alone or containing a branched chain. As far as the polymer has a melt processing property, it may take a crosslinked structure.

As the polyarylene sulfide resin used in the present invention, polyphenylene sulfide resins are preferred.

The epoxy-modified conjugated diene polymer used in the present invention refers to a modified polymer obtained by epoxidation of a polymer having a conjugated double bond-containing diolefin as a constituent unit (hereafter referred to as modified polymer A, too), or a copolymer of a conjugated double bond-containing diolefin with a monomer having at least one epoxy group and at least one ethylenically unsaturated bond (hereafter referred to as modified polymer B, too).

Examples of the conjugated double bond- containing diolefin referred to herein include 1,3-butadiene, 2-methyl-1,3-butadiene (isoprene) 2,3-dimethyl-1,3-butadiene, chloroprene, 1,3-pentadiene, 1,3-hexadiene, etc. In particular, 1,3-butadiene is generally used.

The polymer having a conjugated double bond-containing diolefin as a constituent unit (hereafter also referred to as conjugated diene polymer) may be a homopolymer of the diolefin described above, a copolymer of two or more diolefins described above, or a copolymer obtained by copolymerizing the diolefin described above with a small quantity of at least one other unsaturated monomer copolymerizable with this diolefin, within such a range that the object of the invention is not injured.

Examples of the other unsaturated monomer include methyl methacrylate, methyl acrylate, maleic anhydride, maleimide, styrene, acrylonitrile, etc.

The conjugated diene polymer may contain a crosslinked structure within such a range that the polymer may be subjected to melt processing.

The conjugated diene polymer may be obtained by solution polymerization or may also be prepared by aqueous emulsion polymerization.

For epoxidation of the conjugated diene polymer, for example, the polymer is treated in a conventional manner using an organic peroxy acid such as hydrogen peroxide, peracetic acid, perbenzoic acid, permonophthalic acid, metachloroperbenzoic acid, etc. In this case, other catalysts may also be used in combination.

An epoxy equivalent of the modified polymer obtained by epoxidation of the conjugated diene polymer (i.e. modified polymer A) is preferably 150 to 12000, more preferably 200 to 4000. Where the epoxy equivalent exceeds 12000, the desired effect cannot be obtained; with the epoxy equivalent of less than 150, gellation occurs upon melting and kneading to cause deterioration of extrusion stability, moldability and mechanical properties, which are not preferable.

Examples of the monomer having at least one epoxy group and at least one ethylenically unsaturated bond which may be used in the present invention include glycidyl esters of unsaturated acids such as glycidyl acrylate, glycidyl methacrylate, glycidyl α-ethylacrylate, glycidyl itaconates, glycidyl butenecarboxylates, etc.; allyl glycidyl ether, 2-methylallyl glycidyl ether, styrene-p-glycidyl ether, 3,4-epoxybutene, 3,4-epoxy-3-methyl-1-butene, 3,4-epoxy-1-pentene, 3,4-epoxy-3-methyl-1-pentene, 5,6-epoxy-1-hexene, vinylcyclohexene monoxide, etc. Of these, glycidyl esters of unsaturated acids are preferred, with particular preference of glycidyl methacrylate and glycidyl acrylate. The above monomer may be used singly, i.e., one of the compounds described above, or may be a mixture of at least two of the compounds.

In the present invention, a ratio of the component derived from the monomer having at least one epoxy group and at least one ethylenically unsaturated bond (monomer-1) to the copolymer of monomer-1 with the conjugated double bond-containing diolefin (monomer-2) (i.e. modified polymer B) is preferably 0.1 to 40 wt%, more preferably 1 to 30 wt%. When monomer-1 is less than 0.1 wt%, the desired effect cannot be obtained and when monomer-1 exceeds 40 wt%, gellation occurs upon melting and kneading to cause deterioration of extrusion stability, moldability and mechanical properties. These phenomena are not preferable.

Furthermore, in preparation of this modified polymer B, a small quantity of at least one other unsaturated monomer copolymerizable with monomer-2 described above may be substituted and used for part of the monomer-2, within such a range that the object of the present invention is not injured.

Examples of the other unsaturated monomer include methyl methacrylate, methyl acrylate, maleic anhydride, maleimide, styrene, acrylonitrile, etc.

The modified polymer B may contain a crosslinked structure within such a range that the polymer may be subjected to melt processing.

The modified polymer B may be obtained by solution polymerization or may also be prepared by aqueous emulsion polymerization.

In view of improving impact strength, a formulation ratio of the epoxy-modified conjugated diene polymer to the polyarylene sulfide resin should be 0.5 to 40 parts by weight of the epoxy-modified conjugated diene polymer to 60 to 99.5 parts by weight of the polyarylene sulfide resin (100 parts by weight in total). It is preferred that 10 to 25 parts-by weight of the epoxy-modified conjugated diene polymer be formulated in 75 to 90 parts by weight of the polyarylene sulfide resin (100 parts by weight in total). Where the epoxy-modified conjugated diene polymer is formulated in an amount less than 0.5 parts by weight, the

effect of improving impact strength and moldability of the polyarylene sulfide resin is poor. Where the amount of the epoxy-modified conjugated diene polymer exceeds 40 parts by weight, strength, rigidity and heat resistance of the molded article are undesirably reduced.

The composition of the present invention may contain a filler to further improve heat resistance, mechanical strength, etc. of the composition, as far as the amounts of resin components are within the above-mentioned range.

As the filler, there may be used fillers in various shapes such as fibrous, particulate, powdery shapes, etc. Examples of the filler include glass fibers, carbon fibers, asbestos, ceramic fibers, metal fibers, aramid fibers, silicon nitride, potassium titanate, silicon carbide, barium sulfate, calcium sulfate, calcium silicate, calcium carbonate, magnesium carbonate, antimony trioxide, zinc oxide, titanium oxide, magnesium oxide, iron oxide, molybdenum disulfide, mica, talc, kaolin, pyrophyllite, bentonite, cericite, zeolite, wollastonite, other clay, ferrite, graphite, gypsum, glass beads, glass balloon, etc.

Where the filler is used, the filler is formulated preferably in 10 to 300 parts by weight based on 100 parts by weight of the resin components (total weight of the polyarylene sulfide resin and the epoxy-modified conjugated diene polymer). When the amount is less than 10 parts by weight, the effect of adding the filler is poor, and when the filler is added in an amount exceeding 300 parts by weight, the melting and fluidizing property of the composition decreases so that the external appearance of the resulting molded article tends to be damaged. Such is not preferable.

An antioxidant is preferably added to the composition of the present invention. Examples of the antioxidant include p-phenylenediamine derivatives such as N,N-diphenyl-p-phenylenediamine, N-isopropyl-N′-phenyl-p-phenylenediamine, N-1,3-dimethylbutyl-N′-phenyl-p-phenylenediamine, etc.; dihydroquinoline derivatives such as 6-ethoxy-2,2,4-trimethyl-1,2-dihydroquinoline, etc.; phenol derivatives such as 4,4′-butylidenebis (6-tert-butyl-m-cresol) 2,2′-methylenebis(4-methyl-6-tert-butylphenol), 2,2′-methylenebis(4-ethyl-6-tert-butylphenol), 4,4′-thiobis(6-tert-butyl-m-cresol), 2,6-di-tert-butyl-p-cresol, 2,5-di-tert-amylhydroquinone, 2,5-di-tert-butylhydroquinone, etc.

The composition of the present invention is obtained by melting and kneading the polyarylene sulfide resin and the epoxy-modified conjugated diene polymer, if necessary and desired, together with a filler, an antioxidant and other additives.

Technique for the melting and kneading is not particularly limited but a representative example is a method which comprises melting and kneading the components in an extruder at a temperature higher than the melting point of the polyarylene sulfide resin and then pelletizing the melt mixture.

A temperature for the melting and keading is preferably from 290 to 340 °C. At a temperature below 290 °C, the polyarylene sulfide resin melts sometimes only insufficiently and at a temperature above 340 °C, the epoxy-modified conjugated diene polymer is deteriorated by heat or gelled and hence, care must be taken.

By this melting and kneading operations, at least a part of the epoxy-modified conjugated diene polymer reacts with the terminal functional group of the polyarylene sulfide resin, whereby the reaction product is formed in part. The reaction product acts as a compatibilizing agent with both the polyarylene sulfide resin and the conjugated diene polymer to contribute to improve the compatibility of the two compounds. Therefore, the composition of the present invention which provides markedly improved impact strength and good surface appearance of the molded article can be obtained.

Accordingly, the composition of the present invention provides the molded article having an improved impact strength without damaging the excellent properties inherently possessed by the polyarylene sulfide resin and having a good external appearance, since the epoxy-modified conjugated diene polymer and if necessary, together with a filler, and the polyarylene sulfide resin are uniformly mixed with each other and the mixture is sufficiently dispersed and mixed so as not to cause any phase separation of the respective components even though the composition is subjected to extrusion molding or injection molding under ordinary molding conditions. Furthermore, the epoxy-modified conjugated diene polymer is formulated in the polyarylene sulfide resin in an appropriate ratio.

Hereafter the present invention is described in more detail with reference to the examples but is not deemed to be limited to these examples.

In the examples and reference examples, "parts" and "%" are all by weight, unless otherwise indicated.

Izod impact was measured with a tester in accordance with the method of ASTM D256 (with 1/8" notch). HDT (heat distortion temperature) was determined under a load of 4.6 $kg/cm^2$, in accordance with the method of ASTM D648. The external or surface appearance of the molded test piece was visually evaluated by the presence or absence of iridescent luster.

Reference Example 1 (Preparation of epoxy-modified conjugated diene polymer A-1)

After 216 g of polybutadiene rubber (manufactured by Nippon Zeon Co., Ltd., Nipol 1220S) as the conjugated diene polymer was dissolved in 2 kg of diethyl ether, the resulting solution was cooled to 5°C on a water bath. Then, 66.7 g of sodium acetate trihydrate and 180 g of 40% peracetic acid were dropwise added to the solution. While keeping the temperature below 35°C, the mixture was stirred for 15 hours to react them. Then, the water soluble component was extracted and removed from the solution, using water. After the remaining ethereal solution was dried over magnesium sulfate, the solvent was distilled off to give 220 g of an epoxy-modified conjugated diene polymer (hereafter abbreviated as modified polymer A-1) having an epoxy equivalent of 580 (determined by back titration in a hydrochloric acid-dioxane system).

Reference Example 2 (Preparation of epoxy-modified conjugated diene polymer A-2)

An epoxy-modified conjugated diene polymer (hereafter abbreviated as modified polymer A-2) having an epoxy equivalent of 310 was obtained in an amount of 222 g, in a manner similar to Reference Example 1 except that sodium acetate trihydrate and peracetic acid were used in amounts of 133.4 g and 360 g, respectively.

Reference Example 3 (Preparation of epoxy-modified conjugated diene polymer A-3)

An epoxy-modified conjugated diene polymer (hereafter abbreviated as modified polymer A-3) having an epoxy equivalent of 3500 was obtained in an amount of 217 g, in a manner similar to Reference Example 1 except that sodium acetate trihydrate and peracetic acid were used in amounts of 13.5 g and 40 g, respectively.

Reference Example 4 (Preparation of epoxy-modified conjugated diene polymer A-4)

An epoxy-modified conjugated diene polymer (hereafter abbreviated as modified polymer A-4) having an epoxy equivalent of 15000 was obtained in an amount of 216 g, in a manner similar to Reference Example 1 except that sodium acetate trihydrate and peracetic acid were used in amounts of 3.5 g and 10 g, respectively.

Reference Example 5 (Preparation of epoxy-modified conjugated diene polymer B-1)

In an autoclave were charged 2.97 kg of 1,3-butadiene, 0.33 kg of glycidyl methacrylate, 0.01 kg of diisopropylbenzene hydroperoxide, 0.05 kg of sodium dodecylbenzenesulfonate, 0.025 kg of disodium ethylenediaminetetraacetate, 0.00025 kg of ferrous sulfate, 0.015 kg of sodium formaldehyde sulfoxylate and 10 kg of water. The mixture was emulsion-polymerized at 50°C for 9 hours to give a latex of an epoxy-modified conjugated diene polymer (hereafter abbreviated as modified polymer B-1).

Reference Example 6 (Preparation of epoxy-modified conjugated diene polymer B-2)

An epoxy-modified conjugated diene polymer (hereafter abbreviated as modified polymer B-2) was obtained in a manner similar to Reference Example 5 except that 1,3-butadiene and glycidyl methacrylate were used in amounts of 2.64 kg and 0.66 kg, respectively.

Reference Example 7 (Preparation of epoxy-modified conjugated diene polymer B-3)

An epoxy-modified conjugated diene polymer (hereafter abbreviated as modified polymer B-3) was obtained in a manner similar to Reference Example 5 except that 1,3-butadiene and glycidyl methacrylate were used in amounts of 2.31 kg and 0.99 kg, respectively.

Reference Example 8 (Preparation of epoxy-modified conjugated diene polymer B-4)

An epoxy-modified conjugated diene polymer (hereafter abbreviated as modified polymer B-4) was obtained in a manner similar to Reference Example 5 except that 1,3-butadiene was used in an amount of 3.13 kg and glycidyl acrylate was used in an amount of 0.17 kg in place of glycidyl methacrylate.

Examples 1 to 13 and comparative Examples 1 to 4

As the polyarylene sulfide resin, polyphenylene sulfide [Tohpren T-4 (trademark, manufactured by Tohpren co., Ltd., mean particle diameter of 50 µm) or Ryton M2588 (trademark, manufactured by Toray Philips co., Ltd. )] was used. The polyarylene sulfide resin was mixed with the epoxy-modified conjugated diene polymer (modified polymers A-1 through A-4 and B-1 through B-4) and antioxidant W-400 [trademark, manufactured by Kawaguchi chemical Industry co., Ltd., 2,2′-methylene-bis(4-methyl-6-tert-butylphenol)] in a proportion shown in Table 1. The mixture was melted and kneaded at a cylinder temperature of 290 °C using a twin-screw extruder (manufactured by Werner co., Ltd.) to mold into pellets. After the resulting pellets were dried, test pieces for testing various physical properties were molded at a cylinder temperature of 290 °C and a mold temperature of 80 °C using an injection molding machine (manufactured by Toshiba Machine Co., Ltd., 15-100). Upon formulation, the modified polymers A-1 through A-4 were used in the form of dry powders obtained by dissolving the polymers in toluene together with the antioxidant, blending the solution with polyphenylene sulfide, and removing the solvent by drying in vacuum. The modified polymers B-1 through B-4 were used in the dry form obtained by blending these latexes with the antioxidant and polyphenylene sulf ide and then drying the mixture in vacuum.

Using the resulting test pieces, physical properties were evaluated. The results are shown in Table 1.

For purpose of comparison, each of Tohpren T-4 and Ryton M2588 alone, a blend of polyphenylene sulfide with polybutadiene rubber (manufactured by Nippon Zeon Co., Ltd., Nipol 1220S) in place of the epoxy-modified conjugated diene polymer and a blend of polyphenylene sulfide with Cariflex TR-1101 (manufactured by Shell Chemical Co., Ltd., styrene-butadiene-styrene block copolymer) in place of the epoxy-modified conjugated diene polymer and the antioxidant were extruded in a similar manner to prepare test pieces for evaluation by injection molding. The results are also shown in Table 1.

Table 1

| | PPS (part) | Epoxy-modified conjugated diene polymer or polybutadiene rubber (part) | | Anti-oxidant W-400 (part) | Izod impact strength (kg·cm/cm) | HDT (°C) | Appearance |
|---|---|---|---|---|---|---|---|
| Example: | | | | | | | |
| 1 | X 90 | A-1 | 10 | 0.15 | 28 | 102 | o |
| 2 | X 80 | A-1 | 20 | 0.3 | 32 | 101 | o |
| 3 | X 70 | A-1 | 30 | 0.45 | 37 | 90 | o |
| 4 | X 90 | A-2 | 10 | 0.15 | 36 | 102 | o |
| 5 | X 80 | A-2 | 20 | 0.3 | 45 | 100 | o |
| 6 | X 80 | A-3 | 20 | 0.3 | 26 | 100 | o |
| 7 | X 90 | B-1 | 10 | 0.15 | 20 | 101 | o |
| 8 | X 80 | B-1 | 20 | 0.3 | 23 | 102 | o |
| 9 | X 80 | B-2 | 20 | 0.3 | 23 | 102 | o |
| 10 | X 80 | B-3 | 20 | 0.3 | 21 | 101 | o |
| 11 | X 80 | B-4 | 20 | 0.3 | 21 | 102 | o |
| 12 | Y 80 | A-1 | 20 | 0.3 | 35 | 101 | o |
| 13 | X 80 | A-4 | 20 | 0.3 | 17 | 101 | o |

- Cont'd -

Table 1 (Cont'd)

| Comparative Example: | | | | | | |
|---|---|---|---|---|---|---|
| 1 | X 100 | | | 4 | 101 | |
| 2 | Y 100 | | | 4 | 101 | |
| 3 | X 80 | Nipol 20 | 0.3 | 17 | 101 | x |
| 4 | X 80 | TR 20 | | 9 | 100 | x |

PPS : polyphenylene sulfide

X : Tohpren T-4

Y : Ryton M2588

Nipol: Nipol 1220S

TR : Cariflex TR-1101

o : no iridescent luster

x : iridescent luster

Examples 14 through 18

Using compositions formulated with a polyphenylene sulfide resin, epoxy-modified conjugated diene polymers, antioxidants and fillers shown in Table 2, wherein the modified polymer A-2 was used in the form of a toluene solution thereof and the modified polymer B-2 was blended as latex, these compositions were

provided for use after drying in vacuum and then test pieces were prepared in a manner similar to Example 2 (in Examples 14, 16 through 18) or to Example 9 (in Example 15) , except that the mold temperature in injection molding was set at 140 °C. The results of evaluation are shown in Table 2.

For purpose of comparison, a composition formulated with neither the epoxy-modified conjugated diene polymer nor the antioxidant and a blend of polyphenylene sulf ide with polybutadiene rubber (manufactured by Nippon Zeon Co., Ltd., Nipol 12205) instead of the epoxy-modified conjugated diene polymer were also extruded under the same conditions as in Example 14 to prepare test pieces by injection molding for evaluation of physical properties. The results are also shown in Table 2.

Table 2

| | PPS (part) | Epoxy-modified conjugated diene polymer or polybutadiene rubber (part) | | W-400 (part) | Filler (part) | Izod impact strength (kg•cm/cm) | HDT (°C) |
|---|---|---|---|---|---|---|---|
| Example: | | | | | | | |
| 14 | X 80 | A-2 | 20 | 0.3 | GF 67 | 18 | 264 |
| 15 | X 80 | B-2 | 20 | 0.3 | GF 67 | 17 | 264 |
| 16 | X 80 | A-2 | 20 | 0.3 | Talc 55 | 14 | 258 |
| 17 | X 80 | A-2 | 20 | 0.3 | CF 43 | 14 | 255 |
| 18 | Y 80 | A-2 | 20 | 0.3 | GF 67 | 20 | 264 |
| Comparative Example: | | | | | | | |
| 5 | X 100 | | | | GF 67 | 8 | 265 |
| 6 | X 80 | Nipol | 20 | 0.3 | GF 67 | 10 | 264 |
| 7 | Y 80 | Nipol | 20 | 0.3 | GF 67 | 9 | 264 |
| 8 | X 100 | | | | Talc 55 | 6 | 259 |
| 9 | X 100 | | | | CF 43 | 6 | 256 |
| GF: glass fiber<br>CF: carbon fiber | | | | | | | |

**Claims**

1. A polyarylene sulfide resin composition obtained by melting and kneading 60 to 99.5 parts by weight of a polyarylene sulfide resin and 0.5 to 40 parts by weight of an epoxy-modified conjugated diene polymer (100 parts by weight in total).
2. A polyarylene sulfide resin composition according to claim 1, wherein said polyarylene sulfide resin is a polyphenylene sulfide resin.
3. A polyarylene sulfide resin compostion according to claim 1, wherein said epoxy-modified conjugated diene polymer is a modified polymer obtained by epoxylation of a polymer having a conjugated double bond-containing diolefin as a constituent unit.
4. A polyarylene sulfide resin composition according to claim 1, wherein said epoxy-modified conjugated diene polymer is a copolymer of a conjugated double bond-containing diolefin with a monomer having at least one epoxy group and at least one ethylenically unsaturated bond.
5. A polyarylene sulfide resin composition according to claim 3 or 4, wherein said a conjugated double bond-containing diolefin is 1,3-butadiene.
6. A polyarylene sulfide resin composition according to claim 3, wherein the epoxy equivalent of said modified polymer is 200 to 4000.
7. A polyarylene sulfide resin composition according to claim 4, wherein said monomer having at least one epoxy group and at least one ethylenically unsaturated bond is the glycidyl ester of an unsaturated acid.
8. A polyarylene sulfide resin composition according to claim 4, wherein a ratio of the component derived from said monomer having at least one epoxy group and at least one ethylenically unsaturated bond to said

copolymer is 0.1 to 40 wt%.

9. A polyarylene sulfide resin composition according to claim 8, wherein said ratio is 1 to 30 wt%.

10. A polyarylene sulfide resin composition according to claim 1, which further contains a filler and an antioxidant.